# EUROPEAN PATENT SPECIFICATION

(11) **EP 1 942 418 B1**
(45) Date of publication and mention of the grant of the patent: **05.06.2013**
(21) Application number: 06810082.5
(22) Date of filing: 13.09.2006
(51) Int. Cl.: G06F 13/00, G06F 3/048

(54) **ELECTRONIC DEVICE AND PROGRAM**
ELEKTRONISCHE VORRICHTUNG UND PROGRAMM
DISPOSITIF ELECTRONIQUE ET PROGRAMME

(30) Priority: 26.10.2005 JP 2005310851
(43) Date of publication of application: 09.07.2008
(73) Proprietor: Sharp Kabushiki Kaisha, Osaka-shi, Osaka 545-8522 (JP)
(72) Inventor: TSUCHIYA, Shinichi, Chiba, 290-0056 (JP)
(74) Representative: Müller - Hoffmann & Partner
(86) International application number: PCT/JP2006/318125
(87) International publication number: WO 2007/049405

(56) References cited:
- JP-A- 2000 137 683
- JP-A- 2003 087 246
- JP-A- 2003 087 246
- US-A1- 2004 078 435
- US-A1- 2005 114 781

## Description

### TECHNICAL FIELD

The present invention relates to an electronic device and a program, specifically relates to such an electronic device as cellular phone, personal digital assistant (PDA), and personal computer (PC) that is capable of carrying out an on-line chat using a communication means, and to a program incorporated in the electronic device.

### BACKGROUND OF THE INVENTION

In recent years, chat service for an on-line chat among a plurality of members has been in popular use as cellular phones become widespread and a trend of a fixed amount of communication charge grows stronger. Introduction of PoC (Push to Talk over the Cellular) service has started in some local areas to push an expectation of further popularization of text/image data exchange among a plenty of people. PoC is a call function that allows callers to talk to each other over their phones by pushing buttons in the same way over a transceiver, business-use wireless unit, etc. PoC enables not only person-to-person call but also broadcast call among a plurality of individuals registered as members of a group.

When an electronic device utilizing a communication network, such as a cellular phone, is used in an on-line chat joined by a lot of people, information input by individuals, such as text files, image files, and music files, appear one after another on the screen of the electronic device. Incoming information thus fills up the display screen in no time unless an on-going talk is short, which causes automatic scrolling of the screen to replace the incoming information with new information in succession.

Japanese Laid-Open Patent Publication No. S59-13281 discloses a screen display device that has a screen divided into two areas, one of which is used as a movable area and the other is used as a fixed area, and that facilitates input of the next information by allowing the screen of movable area to move in scrolling display. This screen display device includes a first RAM for display that stores data to be displayed in the fixed area, and a second RAM for display that stores data to be displayed in the movable area. The data in the first RAM is displayed on the display device through a display controlling portion, and the data in the second RAM is transferred by a scroll controlling portion. Specifically, data stored in a part of the second RAM for display is transferred to a temporary memory using a temporary memory for data transfer, and then is stored in another part of the second RAM for display again. This process is repeated to transfer the data in the second RAM for display. Displaying is performed in the same manner as that for the first RAM.

Japanese Laid-Open Patent Publication No. H04-60589 discloses a division scroll method of providing easily operable divided scroll screens by dividing a physical screen only by specifying one or two spots on the physical screen. According to this method, when a diagonal point of an area required to be held on the physical screen by fixing the scroll is specified, the specified area becomes a scroll fixed area. Then, display in the scroll fixed area does not change even if the physical screen is moved on a logical screen by a vertical scroll means or a horizontal scroll means. In this manner, a means for dividing the screen into a plurality of areas specifies one or two spots on the physical screen to divide the physical screen into a plurality of areas, and memorizes the position of a logic screen corresponding to each of the divided areas. This allows a part of the physical screen to be turned into a scroll fixed area, and areas separated apart on the logical screen to be displayed simultaneously on the same physical screen.

Japanese Laid-Open Patent Publication No. 2003-108361 discloses a display processing device that when the size of given display information exceeds a preset given display area, displays the display information in a divided form according to the size of the display information and setting information of a display screen. This display processing device controls an output screen on the basis of the given display information. The device includes a component data extracting means which extracts first component data that can be displayed variably according to the size of the output screen included in the display information, second component data that can be display by the display device, a comparing means which compares the extracted display setting information with the device display information, and a display processing means which displays the first component data in a state of capable of scrolling and does not display the second component data in a state of capable of scrolling, according to a result of the comparison. The Japanese Laid-Open Patent Publication No. 2003-108361 specifically discloses a mechanism that performs the display by dividing the screen according to the amount of information, and that uses one of the divided screens as a screen capable of scrolling and the other as a screen incapable of scrolling.

US 2005/0114781 A1 describes a computer program for managing on-line threaded conversations. A computer screen keeps an input field, a first column (chronology field), and a second column (selection field) displayed, and displays messages of a conversation in chronological order in a first column and, in the second column, currently displayed messages associated to the thread of one of the messages which has been selected from the messages displayed in the first column.

### DISCLOSURE OF THE INVENTION

### PROBLEMS TO BE SOLVED BY THE INVENTION

As described above, when a user participates in an on-line chat over an electronic device utilizing a communication network, the screen on the electronic device is scrolled automatically to output new information in succession. In such a situation, especially when the user participates in an on-line chat joined by a plenty of people, another participant often carries on with the talk while the user is entering characters in an effort for replying to a certain message. In this case, the screen is scrolled on to make the user too confused to remember which message to comment on.

Particularly, mobile devices, such as cellular phone and PDA, has a small display screen, which often invites a case where the entire information cannot be seen unless the display screen is scrolled. Besides, since an on-line chat among a plenty of people results in a large amount of information writing, the display screen is scrolled immediately and the information to which some comments are intended to add is often disappears out of the display screen. Even when other electronic devices other than a mobile device, such as PC and the like, are used in an on-line chat among a lot of people or between the persons well experienced with chat procedures to input at high speed, the information to which some comments are intended to add sometimes disappears out of the display screen as in the above case. On-line chat mentioned here includes one that is carried out through transmission/reception and display of instant messages.

The above screen display device disclosed in Japanese Laid-Open Patent Publication No. S59-13281 relates only to how to use a memory for performing a display by dividing a screen, and is not provided on the assumption of automatic scrolling in chatting. This display device, therefore, does not offer a solution to the above problem.

According to the division scroll method disclosed in Japanese Laid-Open Patent Publication No. H04-60589, any given diagonal point on a scroll screen is specified to display a specified area as a fixed area independent of the scroll screen, so that the specified area is kept displayed in a fixed state even if the scroll screen is scrolled. This method, however, poses a problem that the fixed area is fixed as it is on a specified physical screen to conceal a part of the scroll screen that is at the back of the fixed area. Japanese Laid-Open Patent Publication No. H04-60589 offers another technique of dividing the screen vertically or horizontally to provide one divided area as a fixed screen and the other divided area as a scroll screen. This technique, however, relates to graphical coordinate arrangement, and has nothing to do with arrangement of lines and lows of characters. In addition, Japanese Laid-Open Patent Publication No. H04-60589 is not provided on the assumption of automatic scrolling in chatting. The technique disclosed in Japanese Laid-Open Patent Publication No. H04-60589, therefore, does not offer a solution to the above problem.

The display processing device disclosed in Japanese Laid-Open Patent Publication No. 2003-108361 automatically divides the screen according to the amount of information to display when the size of information to display exceeds that of a display area of the display device, and provides one of the divided areas of the screen as a scroll screen. Japanese Laid-Open Patent Publication No. 2003-108361 relates to a general method of screen division display, but does not refer to a screen configuration for making a replay to a massage in an on-line chatting or text data communication. The technique disclosed in Japanese Laid-Open Patent Publication No. 2003-108361, therefore, does not offer a solution to the above problem.

The present invention was conceived in view of the above circumstances, and therefore the object of the present invention is to allow a user participating in an on-line chat to select any desired information out of log information displayed on a log information screen and display the selected information in separation from the log information screen to be able to input a comment on the selected information while seeing the selected information.

### MEANS FOR SOLVING THE PROBLEMS

To solve the above problems, a first technical means of the present invention is an electronic device having a display means for displaying information, an input means for inputting information, and a communication means for communicating with another electronic device, the electronic device comprising: an input information output means for outputting input information from the input means to the display means and to the communication means; a log information output means for outputting information transmitted and received by the communication means to the display means; an information selecting means for selecting any desired information, based on a user's selection, out of information that is displayed by the display means as a result of output from the log information output means; and a selected information output means for outputting information selected by the information selecting means to the display means, wherein the display means has a division display means that simultaneously displays input information output from the input information output means, log information output from the log information output means, and selected information output from the selected information output means on the same screen in a divided form.

A second technical means is the electronic device as defined in the first technical means, wherein the information selecting means has a means that selects a plurality of pieces of information as the any desired information, the selected information output means has a means that outputs the plurality of pieces of information selected by the information selecting means to the display means, and the division display means has a means that simultaneously displays each of the plurality of pieces of output information on the same screen in a divided form.

A third technical means is the electronic device as defined in the first or second technical means, comprising a selecting means for selecting any one of display areas of the input information, the log information, and the selected information, wherein the division display means has a means that displays the display area selected by the selecting means as an operable screen, and that displays other unselected display areas as inoperable screens in a discriminated manner.

A fourth technical means is the electronic device as defined in any one of the first to third technical means, wherein the log information output means has a means that outputs the information selected by the information selecting means to the display means, the information being selected out of log information displayed by the display means, to so display the selected information as to be discriminative from other unselected information.

A fifth technical means is the electronic device as defined in any one of the first to fourth technical means, comprising a selected information display canceling means for canceling the selected information output by the selected information output means to cancel display of the selected information at the display means.

A sixth technical means is the electronic device as defined in the fifth technical means, wherein the selected information display canceling means has a means that receives display canceling instruction operation of the selected information from a user, and a means that cancels the display of the selected information at the display means by detecting the execution of the display canceling instruction operation.

A seventh technical means is the electronic device as defined in the fifth technical means, wherein the selected information display canceling means has a means that cancels the display of the selected information at the display means by detecting the completion of information input through the input means as a reply to the selected information.

An eighth technical means is the electronic device as defined in the fifth technical means, wherein the selected information display canceling means has a means that cancels the display of selected information at the display means after transmitting the input information through the communication means as a reply to the selected information.

A ninth technical means is the electronic device as defined in any one of the first to eighth technical means, wherein the selected information output means has a means that when the information is selected by the information selecting means, outputs the selected information to the display means in order to replace the previously output information.

A tenth technical means is the electronic device as defined in any one of the first to ninth technical means, wherein the division display means has a means that varies a ratio of each display area on the screen for the input information output from the input information output means, for the log information output from the log information output means, and for the selected information output from the selected information output means.

An eleventh technical means is the electronic device as defined in any one of the first to tenth technical means, wherein the input information output means has a means that outputs information of a model sentence, in addition to the input information from the input means, to the display means and/or to the communication means, the model sentence containing subordinate information included in the selected information selected by the information selecting means.

A twelfth technical means is the electronic device as defined in any one of the first to tenth technical means, wherein the input information output means has a means that outputs the selected information selected by the information selecting means, in addition to the input information from the input means, to the display means and/or to the communication means.

A thirteenth technical means is the electronic device as defined in any one of the first to twelfth technical means, wherein the information selecting means has a means that extracts given information out of information that is displayed at the display means as a result of output from the log information output means and selects log information related to the extracted given information.

A fourteenth technical means is the electronic device as defined in any one of the first to thirteenth technical means, wherein the division display means displays a display area for the log information through-scrolling.
A fifteenth technical means is the electronic device as defined in any one of the first to fourteenth technical means, wherein the electronic device is a cellular phone or a personal digital assistant.
A sixteenth technical means is a program which is incorporated into the electronic device as defined in any one of the first to fifteenth technical means, the program operable to cause a processor of the electronic device to work as the input information output means, the log information output means, the selected information output means, and the division display means.

### EFFECT OF THE INVENTION

According to the present invention, a user participating in an on-line chat is allowed to select any desired information out of log information displayed on a log information screen and display the selected information in separation from the log information screen to be able to input a comment on the selected information while seeing the selected information.

### BRIEF DESCRIPTION OF THE DRAWINGS

[Fig. 1] Fig. 1 is a block diagram of an example of a basic configuration of an electronic device for an on-line chat according to one embodiment of the present invention.
[Fig. 2] Fig. 2 is a diagram of an example of the display screen of the electronic device of Fig. 1.
[Fig. 3] Fig. 3 is a block diagram for specifically describing a data flow in the electronic device of Fig. 1.
[Fig. 4] Fig. 4 is a diagram of an example of the basic screen configuration of the electronic device of Fig. 1.
[Fig. 5] Fig. 5 is a view of illustrating information exchange between memories on the display screen of Fig. 2.
[Fig. 6] Fig. 6 is a chart for illustrating an example of a process flow in the electronic device of Fig. 1.
[Fig. 7] Fig. 7 is a diagram of an example of another screen configuration of the electronic device of Fig. 1.
[Fig. 8] Fig. 8 is a diagram of an example of still another screen configuration of the electronic device of Fig. 1.
[Fig. 9] Fig. 9 is a diagram of an example of still another screen configuration of the electronic device of Fig. 1.
[Fig. 10] Fig. 10 is a diagram of an example of still another screen configuration of the electronic device of Fig. 1.
[Fig. 11] Fig. 11 is a diagram of an example of still another screen configuration of the electronic device of Fig. 1.
[Fig. 12] Fig. 12 is a diagram of an example of still another screen configuration of the electronic device of Fig. 1.

### EXPLANATION OF REFERENCE NUMERALS

1...electronic device; 11...communication I/F; 12...communication controlling portion; 13...image processing portion; 14...image pick-up portion; 15...nonvolatile memory; 16...main controlling portion; 17...volatile memory; 18...speaker; 19...display driver 20...display portion; 21...microphone; 22...operation input portion 30...display screen; 31...log screen (log display portion); 31a...emphasized display portion; 31D...transmission side selected information; 32...character input screen (input information display portion); 32a...input information display portion a; 32b...input information display portion b; 32A...bold frame emphasized portion; 32B...color emphasized portion; 32C, 33C...subordinate information; 33D...automatically selected information; 33...selected information screen (selected information display portion); 33a...selected information display portion a; 33b...selected information display portion b; and 34...variable bar.

### PREFERRED EMBODIMENTS OF THE INVENTION

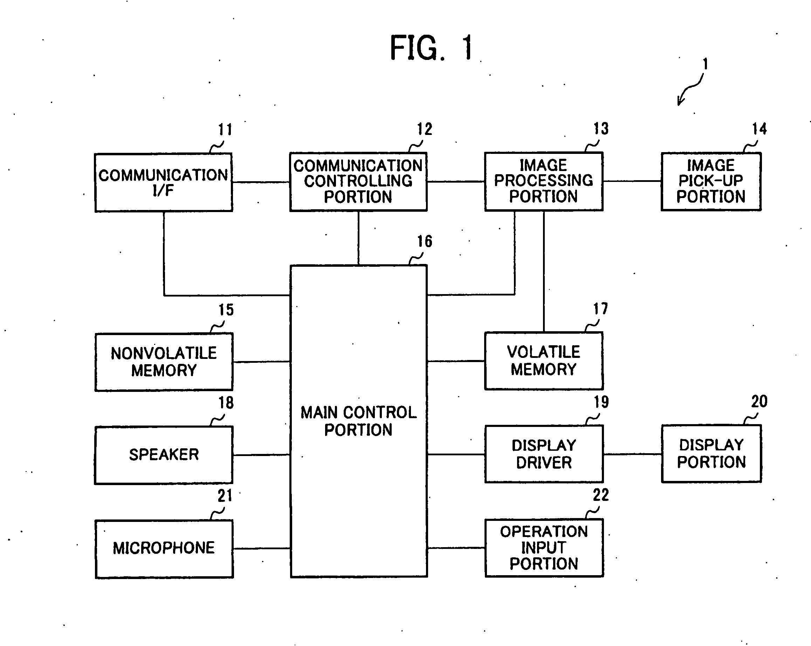

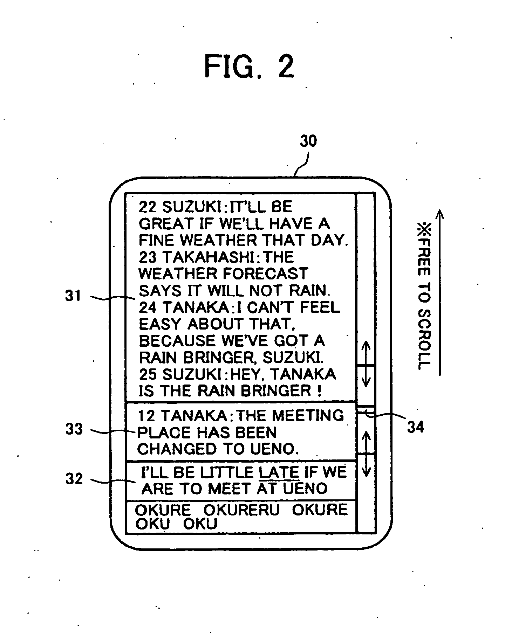

Fig. 1 is a block diagram of an example of a basic configuration of an electronic device for an on-line chat according to one embodiment of the present invention, and Fig. 2 is a diagram of an example of the display screen of the electronic device of Fig. 1. The electronic device 1 shown in Fig. 1 is provided in the form of various types of information processors including a cellular phone, PDA, mobile PC, and desktop PC. The display screen 30 of Fig. 2 is an example of a screen displayed on a display portion of a cellular phone.

The electronic device 1 according to the present invention includes an input means that inputs various types of information such as text/image files and music files, a display means that display such information, and a communication means that carries out communication with another electronic device. These means enable the electronic device 1 to carry out an on-line chat. On-line chat mentioned here includes one that is carried out through transmission/reception and display of instant messages. The present invention has a major feature in providing a screen display method (screen display form) for an on-line chat, which will be described later.

Hereinafter, an instance of the input means is provided as an operation input portion 22 for carrying out key-based input and other operations, and an instance of the display means is provided as a display portion 20 (and a display driver 19). The communication means carries out communication with another electronic device regardless of variation in communication forms including a wired line, wireless line, serial transmission, parallel transmission, and out-band/in-band system. The communication means, specifically, is provided as RS232C, Bluetooth, wireless LAN, infrared communication, Ethernet (registered trademark), USB, ISDN circuits, W-CDMA (Wideband Code Division Multiple Access), CDMA2000, etc. Hereinafter, an instance of the communication means is provided as a communication interface (communication I/F) 11 and a communication controlling portion 12.

The electronic device 1 includes a communication portion (communication I/F 11 and communication controlling portion 12), the display portion 20, the character input and operation input portion 22, a main controlling portion 16 that controls the communication portion, display portion 20, and operation input portion 22, and memories (volatile memory 17 and nonvolatile memory 15) that process data. The electronic device 1 may further include an image pick-up portion 14 and a microphone 21 as other input interfaces. Fig. 1 depicts an example of the electronic device 1 that is composed of the communication I/F 11, the communication controlling portion 12, an image processing portion 13, the image pick-up portion 14, the nonvolatile memory 15, the volatile memory 17, the speaker 18, the display driver 19, the display portion 20, the microphone 21, the operation input portion 22, and the main controlling portion 16 that controls the above components.

The electronic device 1 carries out wireless communication or wire communication by causing the communication controlling portion 12 to control the communication I/F 11. Adoption of wireless communication or wire communication depends on the specification and usage of the electronic device 1. The image pick-up portion 14 is a camera for taking a photo or picking up an image. An image picked up by the image pick-up portion 14 is processed by the image processing portion 13, and is stored in the nonvolatile memory 15, etc. The volatile memory 17 is used as a buffer memory for the image processing portion 13, main controlling portion 16, and display driver 19. The display driver 19 is the driver for displaying an image at the display portion 20, which is a liquid crystal display device, etc. The speaker 18 and microphone 21 are used mainly for talking. The speaker 18 emits a sound upon reproducing contents or receiving an incoming call, and the microphone 21 is used for sound input including sound input for operation of the electronic device 1 other than for a call.

As described above, input information may include sound information and image information in addition to character information. Input of character information is carried out not only through input operation at the operation input portion 22, but may also be carried out through a sound input process at the microphone 21 and a sound-to-character conversion process of converting an input sound to characters. Image information is input by adding a link address of an image file which is read from the image pick-up portion 14, through a network, or from a recording medium at the operation input portion 22, or by attaching an image file (music file) itself in the same manner as attaching a character file to allow the display portion 20 or the display portion of another electronic device which is communicating with the electronic device 1 to display the image file. Thus, a user of another electronic device who selected the image file can see the image (listen to the music).

The electronic device 1 of the present invention includes an input information output means and a log information output means for carrying out an on-line chat with another electronic device. The input information output means outputs the information input from the operation input portion 22 to the display portion 20 (actually via the display driver 19) in order to display the information at the display portion 20. As a result, input characters, file name, etc., are displayed on a character input screen 32 on the display screen 30. As shown in Fig. 2, the character input screen 32 may display conversion candidates for words that have been entered at present. In order to transmit the information input from the operation input portion 22, the input information output means outputs the information not only to the display portion 20 but also to the communication I/F 11 of the communication portion.

The log information output means outputs the information transmitted/received through the communication I/F 11 to the display portion 20 (actually via the display driver 19) in order to display the information according to time sequence in transmission and reception. As a result, characters, file name, etc., are displayed as a chat log on a log screen 31 on the display screen 30. Such a log is displayed in the form of additional lines at every information transmission/reception. The display area of the log screen 31 is limited, and therefore the latest log fitting into the display area is displayed on the log screen 31, where the past log can be displayed by scrolling. The information displayed on the character input screen 32 of the display portion 20 by the input information output means is displayed as a piece of information on the log screen 31 of the display portion 20 by the log information output means when a user executes the operation of settling transmission of the information.

The input information output means, in combination with the display portion 20 can also be referred to as an input information display means that displays character/image data, etc., input through a keyboard, microphone, camera, etc. The log information output means, in combination with the display portion 20, can also be referred to as a log display means that displays the contents displayed on the input information display means and the information received from the communication means.

The electronic device 1 further includes an information selecting means and a selected information output means, both means being provided as a main feature of the present invention. The information selecting means selects any desired information out of the information that is displayed on the log screen 31 of the display portion 20 based on a user selection the selection by the user can be performed through the operation at the operation input portion 22, etc. A variety of specific methods can be adopted in selecting a message, which include a method of selecting a message using a pointing device such as a mouse, a method of making a selection by moving a cursor using a keyboard or cross-key and a method of entering and specifying a message number and the like.

The selected information output means outputs the information selected by the information selecting means to the display portion 20 (actually via the display driver 19) in order to separately display the selected information. As a result, characters, file name, etc., are displayed on a selected information screen 33 on the display screen 30 as the information selected by the information selecting means (e.g., information of "The meeting place has been changed to Ueno.").

To enable division display as described above, the display means has a division display means. The division display means is the means that simultaneously displays the information output from the input information output means (input information), the information output from the log information output means (log information), and the information output from the selected information output means (selected information) on the same screen in a divided form. This division display means causes the selected information output means to output log display information which is selected by the user through the information selecting means to the display portion 20, and enables the display of selected information on a display area different from a log display area. The display screen 30 of the display portion 20 has not only the log display area (log screen 31) and a selected information display area (selected information screen 33) but also an input information display area (character input screen 32). On the display screen 30, therefore, the user can input characters, image, etc., while constantly displaying any selected information.

According to the configuration shown in Fig. 1, the above described input information output means, log information output means, selected information output means (and a part of the information selecting means), and the division display means are incorporated into the main controlling portion 16 as a program stored in an executable form. This program is stored, for example, in the nonvolatile memory 15 or a ROM (or rewritable ROM) in the main controlling portion 16. A CPU in the main controlling portion 16 reads out the program into the volatile memory 17 or a RAM serving as a work area in the main controlling portion 16 to execute the program.

The present invention, as described above, can be provided in the form of the program that is incorporated in the electronic device 1 and functions to operate the main controlling portion 16 (a processor in the main controlling portion 16) of the electronic device 1 to work as the input information output means, log information output means, selected information output means (and a part of the information selecting means), and division display means. The present invention may also be provided in the form of a computer-readable recording medium which records the program, such as FD, CD, DVD, MO, and USB memory.

When an on-line chat is carried out, according to the configuration as described above, the information sent from another electronic device is received by the communication I/F 11, and is displayed on the log screen 31 of the display portion 20 by the display driver 19. When information is transmitted from the user's terminal device (electronic device 1), the information input at the operation input portion 22 is once displayed on the character input screen 32 of the display portion 20 by the display driver 19, and, following the settlement of transmission, transmitted to another electronic device via the communication I/F 11, and then displayed on the log screen 31 together with the information sent from others. When a chat server is installed, the information input at the operation input portion 22 may be transmitted to the chat server without directly being displayed on the display portion 20, and received together with the log information from another electronic device in order to be displayed on the display portion 20.

When the display at the display portion 20 is controlled only by the input information output means, log information output means, and division display means which displays the output from those output means by dividing them, messages B, C, D, --- being sent from other chat participants are displayed and scrolled on the scroll screen at all times even if the user is still writing on while stopping a specific message A from scrolling. In other words, in an on-line chat joined by a plenty of people and carried out by an electronic device utilizing a conventional communication network (on-line chat system), a chat between other participants proceeds further while the user is still writing a comment in an effort of replying to a certain message, and the message to which the user is trying to reply is scrolled and disappeared out of the screen and the user cannot write the reply while reading the message to be replied.

In contrast, according to the present invention, the display at the display portion 20 is controlled not only by the input information output means and log information output means (and division display means), but also by the selected information output means and division display means displaying each output by dividing the output. As a result, in contrast with the above case where the log screen 31 is usually scrolled in an on-line chat joined by a lot of people, the display of any desired comment can be fixed so that the user can see which comment the user is replying to. In the above example of Fig. 2, when a message A ("12 Tanaka: The meeting place has been changed to Ueno.") is selected, the display of the message A is fixed on a separate part of the screen (selected information screen 33) to be prevented from scrolling. The user, therefore, is able to write a comment while referring to the message A displayed on the selected information screen 33, and to input the comment while referring to the character input screen 32.

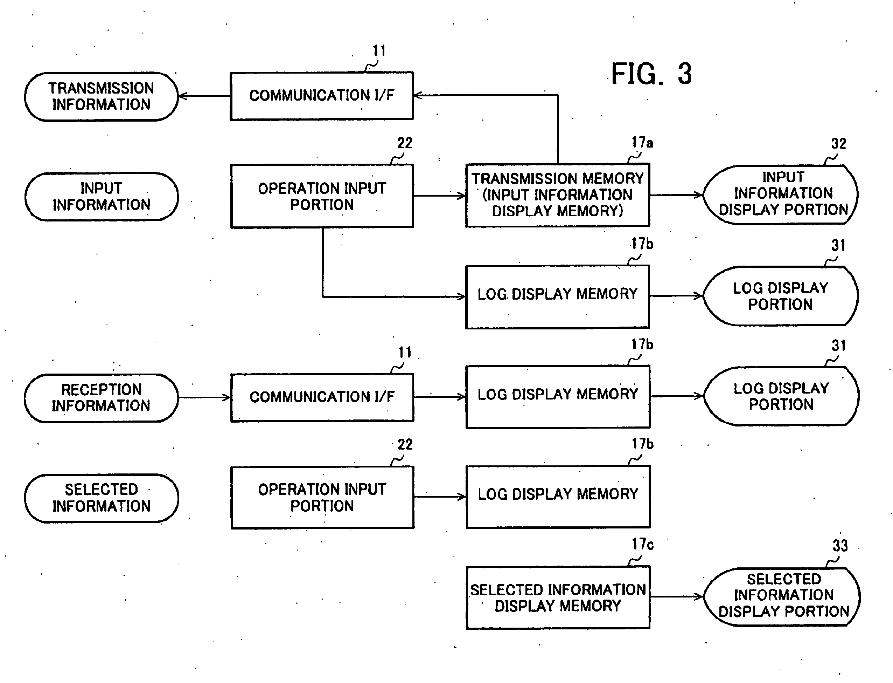

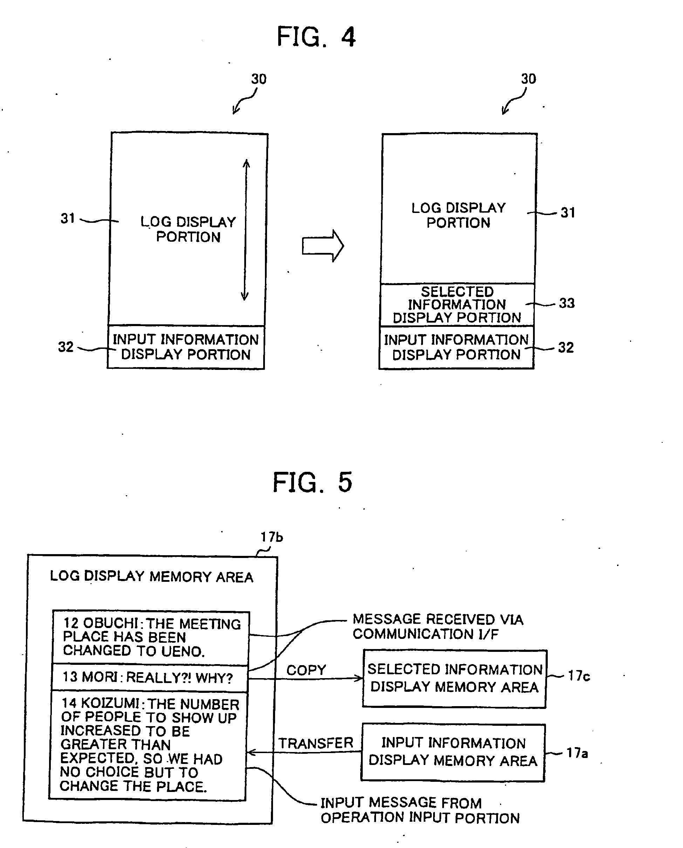

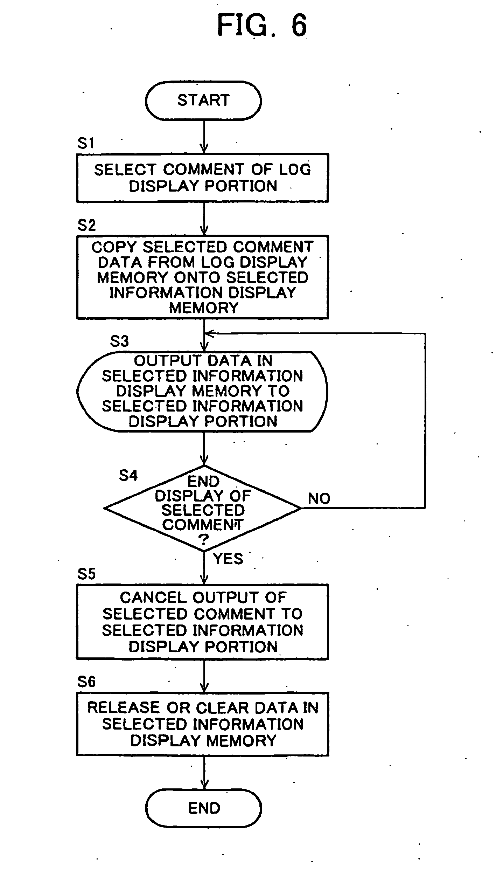

Fig. 3 is a block diagram for specifically explaining a data flow in the electronic device of Fig. 1, Fig. 4 is a diagram of an example of the basic screen configuration of the electronic device of Fig. 1, Fig. 5 is an explanatory view of information exchange between memories on the display screen of Fig. 2, and Fig. 6 is an explanatory view of an example of a process flow in the electronic device of Fig. 1.

A process of displaying the display screen 30 of Fig. 2 on the electronic device of Fig. 1 will be described in detail, referring to Figs. 3 to 6. As shown in Fig. 3, the volatile memory 17 of Fig. 1 has a transmission memory (input information display memory) 17a, a log display memory 17b, and a selected information display memory 17c as buffer memories. The memories 17a to 17c may be provided as divided areas of a single memory, or as respective separate memories.

The input information input through the operation input portion 22 is displayed on the character input screen (input information display portion) 32 of the display screen 30 of Fig. 2. This input information, specifically, is a comment the user tries to transmit, namely, the information which is composed of characters, image, etc., in a case of a chat system. More specifically, the input information input through the operation input portion 22 (character data, etc., when the operation input portion 22 is a keyboard) is stored temporarily in the transmission memory 17a, and the input information is displayed on the input information display portion 32 of the display portion 20 at the time.

When the user executes input completion operation in a state that the input information is displayed on the input information display portion 32, a completion (transmission) processing is executed to transmit the input information to another electronic device via the communication portion. Specifically, when a transmission command is input, the communication controlling portion 12 transmits the input information out of the transmission memory 17a via the communication I/F 11. The input information is transmitted to a server in a case of a hybrid chat system, and to the terminal unit of a contacting party in a case of a peer-to-peer chat system. After transmission of the input information, the transmission memory 17a is released from its service, and display on the input information display portion 32 is cancelled.

A log is displayed on the log screen (log display portion) 31 when log information transmitted/received through the communication I/F 11 and stored in the log display memory 17b is read out. In the case of the hybrid chat system, the information transmitted to the server following the input completion processing and the information transmitted from the contacting party is sent together from the server as log information, which is received via the communication I/F 11, and then is transferred to the log display memory 17b. In the case of the peer-to-peer chat system, on the other hand, the user's input information is transferred from the transmission memory 17a to the log display memory 17b. In this manner, information from another electronic device is also received at the communication portion, and is displayed on the log display portion 31. If the size of information displayed on the log display portion 31 exceeds an allowable range of display, the log information displayed on the log display portion 31 is automatically scrolled.

When any desirable information is selected out of the information displayed on the log display portion 31 using the operation input portion 22, the selected information is displayed on the selected information screen (selected information display portion) 33 as shown on the right side of Fig. 4. The selected information may be a unit of information displayed on the log display portion 31 or a part of the unit of information. The information displayed on the selected information display portion 33 may be the whole of the selected information, or may be a part of the selected information when the whole of the selected information cannot be displayed within a selected information display area. Different from the information displayed on the log display portion 31, the information displayed on the selected information display portion 33 is not scrolled automatically, and, therefore, does not disappear out of a visible range. When log information selection is not carried out, the selected information display portion 33 is eliminated from the screen as shown on the left side of Fig. 4. Besides, according to the present invention, the input information display portion 32 shown on both left and right sides of Fig. 4 does not necessarily have to be displayed constantly.

A process flow from selection of selected information to cancellation of display of the selected information will be described specifically, referring to Figs. 5 and 6. As shown in Fig. 5, it is assumed that log data is stored in the log display memory 17b and log information corresponding to the log data displayed on the log display portion 31. Fig. 5 depicts an instance of data transfer between memories in a chat scene precedent to the chat scene involving the conversation displayed on the display screen 30 of Fig. 2. In this instance, the log display memory 17b stores the data received via the communication I/F 11, such as "12 Obuchi: The meeting place has been changed to Ueno." "13 Mori: Really. Why?", and also stores the data that is input through the operation input portion 22 and is transferred from the input information display memory 17a, such as "14 Koizumi: The number of people to show up increased to be greater than expected ---". Actually, the log display memory 17b further stores the data of a conversation precedent to the conversation of "12 ---" and the data of a conversation after the conversation of "14 ---". In displaying log information, the data to be displayed is selected through scroll operation.

When a certain message ("13 ---" in this case) is selected by the user out of the information displayed on the log display portion 31 to fix the display (step S1), a piece of data corresponding to the selected message ("13 ---" in this case) is cut out from the data in the log display memory 17b, and is copied onto the selected information display memory 17c (step S2). Subsequently, the selected message data ("13 ---" in this case) is output to the selected information display portion 33, and is displayed thereon (step S3).

Following display of the selected information at step S3, whether display of the selected comment is to be ended is determined (step S4). If the display is to be ended, output of the selected comment to the selected information display portion 33 is cancelled (step S5), and the data in the selected information display memory 17c is released or cleared (step S6), thus the process flow is ended. Meanwhile, when a determination of NO is given at step S4, the processing at step S3 is continued. The processing at step S4 will be described later in another embodiment.

As described above, the user can input information as the user constantly displays any desirable information, which is selected out of information displayed on the log display portion 31 in a visible range (selected information display portion 33). According to the present invention, when participating in an on-line chat, the user selects any desirable information out of log information displayed on the log information screen and displays the selected information in separation from the log information screen. This allows the user to input a comment on the selected information while seeing the selected information. In an on-line chat system, therefore, the user is allowed to input a comment while constantly checking information in a visible range even in use of a small screen by cutting out a part of displayed information that can be scrolled to display the cut out information separately. This offers the user improved convenience in an on-line chat.

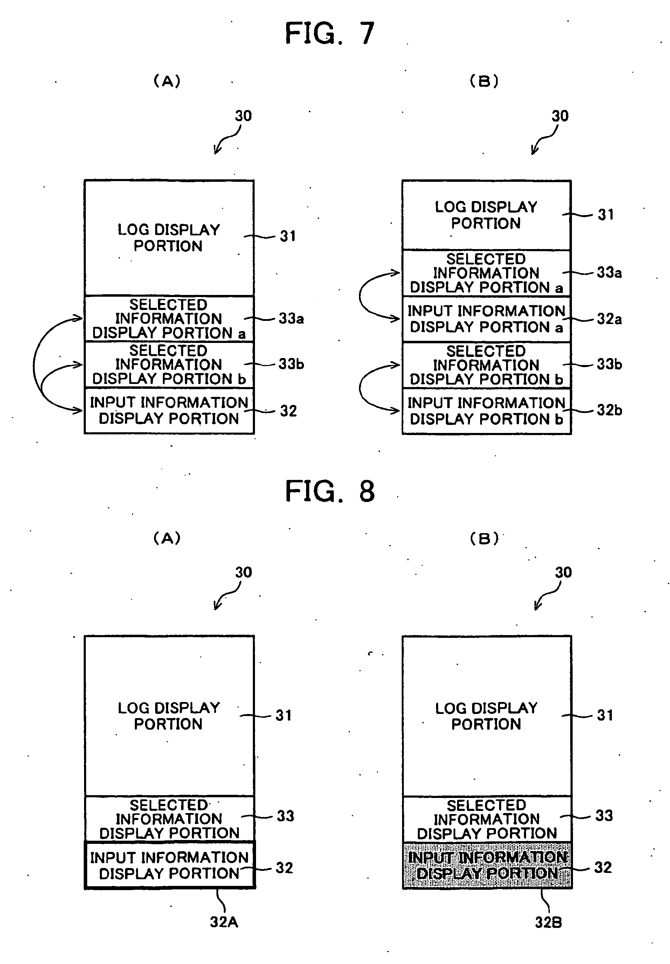

Fig. 7 is a diagram of an example of another screen configuration of the electronic device of Fig. 1. Fig. 7 depicts an example of a screen configuration including two piece of selected information. According to another embodiment of the present invention, a plurality of pieces of log information (messages) should preferably be allowed to be selected and displayed in the above embodiment.

When the user wants a plurality of pieces of information included in information displayed on the log display portion to be displayed constantly in a visible range, the user selects the plurality of pieces of information to allow display of a plurality of selected information display portions. To that end, according to the present embodiment, the information selecting means has a means that selects a plurality of pieces of information (log information) as any desirable information, and the selected information output means has a means that outputs the plurality of pieces of information selected by the information selecting means to the display portion 20 so that the display portion 20 simultaneously displays each piece of information in separation. In other words, the information selecting means selects a plurality of pieces of information from the log display means, and the division display means causes the display portion 20 to display the plurality of pieces of information at the selected information display means.

In Fig. 7(A), two pieces of selected information are constantly displayed in a visible range, that is, on a selected information display portion a (33a) and a selected information display portion b (33b), respectively. In Fig. 7(B), two pieces of selected information are constantly displayed on the selected information display portion a (33a) and the selected information display portion b (33b), respectively, where an input information display portion a (32a) and an input information display portion b (32b) are provided in correspondence to the selected information display portion a (33a) and the selected information display portion b (33b), respectively. A set of the selected information display portion a (33a) and the input information display portion a (32a) may be displayed in the same color, and another set of the selected information display portion b (33b) and the input information display portion b (32b) may also be displayed in the same color. This facilitates the recognition of each set. While Fig. 7 depicts an example of two selected information display portions displayed constantly, selection and display of more than two pieces of information is also possible.

Fig. 8 is a diagram of an example of still another screen configuration of the electronic device of Fig. 1. Fig. 8 depicts an example of a screen configuration that allows the recognition of a screen on operation. The present invention allows the display portion 20 to have a plurality of display areas. According to another embodiment of the present invention, therefore, a means for recognizing which display area is on operation should preferably be provided in the above embodiments.

According to the present embodiment, the electronic device is provided with a selecting means (display screen selecting means) that selects any one of the display areas (display portions 31 to 33) of input information, log information, and selected information, and the division display means has a means that displays a display area selected by the selecting means as an operable screen and other unselected display areas as inoperable screens in a discriminated manner. A selected display screen is, therefore, displayed as the operable screen so that it can be discriminated from other unselected display screens.

Specifically, the frame of a display portion on operation is changed in thickness for emphasis, as exhibited by a bold frame emphasized portion 32A in Fig. 8(A), or the color of a display portion on operation is changed, as exhibited by a color emphasized portion 32B in Fig. 8 (B). In this manner, an active display area is indicated. While Fig. 8 depicts an example of the result of selection of the input information display portion 32 by the selecting means, a selected portion is displayed so that it is discriminated from others in the same manner as described above when another display portion (log display portion 31 or selected information display portion 33) is selected.

In a specific processing carried out in the electronic device 1, for example, when the user moves a cursor at the operation input portion 22 to any one of the display portions 31 to 33 to select, the main controlling portion 16 changes its access to the memory corresponding to the destination of the moving cursor (transmission memory 17a in the example of Fig. 8) among the transmission (input information display) memory 17a, log display memory 17b, and selected information display memory 17c, and activates the display area corresponding to the accessed memory as an operable screen. Every display area is set in advance to have the same frame and background, and the frame and background of the area whose memory is accessed at present is preferably changed so that they can be discriminated.

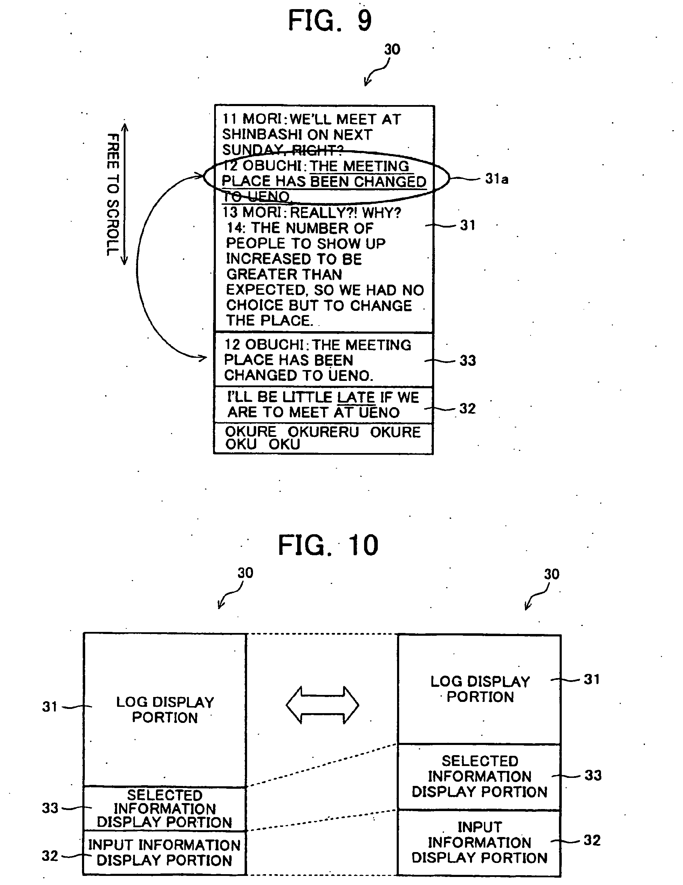

Fig. 9 is a diagram of an example of still another screen configuration of the electronic device of Fig. 1. Fig. 9 depicts an example of the screen configuration that puts selected information in emphasized display on the log screen. The selected log information is displayed as the selected information on the selected information display portion in the above embodiments. In contrast, according to another embodiment of the present invention, the selected information should preferably be so displayed on the log display area as to be discriminated from other unselected information also in log display.

To that end, the log information output means of the present embodiment has a means that outputs the information selected by the information selecting means out of log information displayed by the display portion 20 to the display portion 20 in order to display the selected information so that it can be discriminated from other unselected information. In the example of Fig. 9, the line "12 Obuchi: The meeting place has been changed." is underlined to emphasize the display as the information selected by the information selecting means.

It can be easily distinguished that where the information displayed on the selected information display portion 33 is located on the log display portion 31 by displaying the original information of information displayed on the selected information display portion 33 among the information displayed on the log display portion 31 separately as the information on an emphasized display portion 31a. A method of discrimination in this case includes changing the color of the original information, changing the size or thickness of displayed characters, and underlining displayed characters. In another method, when the log display portion 31 is scrolled manually, a sound, light, or vibration may be emitted to notify the user of display of the original information when the original information appears on the log screen.

According to another embodiment of the present invention, the electronic device 1 of the above embodiments should preferably have a selected information display canceling means that cancels the selected information output by the selected information output means and cancels the display of the selected information at the display portion 20. Display cancellation here means a case indicated in Fig. 4 where a state of display of the selected information display portion 33 shown on the right side is shifted to a state of no display of the selected information display portion 33 on the left side.

This display cancellation may leave the selected information display portion blank, or may cause the selected information display portion to disappear from the display screen 30. Allowing easy cancellation of selected information displayed on the selected information display portion prevents unnecessary occupation of a display area of the log display portion.

Display cancellation on selected information executed by the selected information display canceling means is provided in various forms of processing such as (1) display cancellation based on operation by the user through the operation input portion 22, (2) display cancellation executed at the point of completion of input of a reply comment, and (3) display cancellation at the point of reception of a reply comment. Any processing of display cancellation can be adopted to make a determination at step S4 in Fig. 6.

When the form of (1) is adopted, it is convenient that the selected information display canceling means has a means that receives display canceling instruction operation of selected information from the user at the operation input portion 22, and a means that detects the execution of the display canceling instruction operation to cancel the display of the selected information at the display portion 20 (selected information display portion 33). According to this embodiment, the display of the selected information for the message that is selected and its display is fixed is automatically cleared when the user carries out the prescribed display canceling instruction operation.

When the from of (2) is adopted, it is desirable that the selected information display canceling means has a means that detects the completion of information input through the operation input portion 22 as the reply to the selected information by checking input completion operation executed by the user at the operation input portion 22, to cancel the display of the selected information at the display portion 20 (selected information display portion 33). According to this embodiment, the display of the selected information for the message that is selected and its display is fixed is automatically cleared when the user inputs a reply to the message.

When the form of (3) is adopted, it is desirable that the selected information display canceling means has a means that cancels the display of selected information at the display portion 20 (selected information display portion 33) after transmission of input information through the communication portion as the reply to the selected information. According to this embodiment, the display of the selected information for the message that is selected and its display is fixed is automatically cleared after the user has input a reply to the message and transmitted the replay via the communication I/F 11.

According to the forms (2) and (3), the display contents of the selected information display portion is deleted automatically or is deleted from the display screen 30 by the selected information display portion. In comparison with the form (1), these forms (2) and (3) offer an advantage of saving the user from trouble of manually deleting the display of the selected information after the transmission of the reply information.

A specific instance of the screen in the form (3) will be described. According to the screen configuration of Fig. 4, when a comment is displayed on the input information display portion 32 following the input of the comment through the operation input portion 22 and has been transmitted in ensuing transmission operation (input completion operation), the display screen 30 changes in configuration from the screen shown on the left side to that shown on the right side in Fig. 4.

In Fig. 7 (A), the selected information display portion a (33a) is assumed to be the one that is selected and displayed first and the selected information display portion b (33b) is assumed to be the one that is selected and displayed next. In this case, when a comment is displayed on the input information display portion 32 following the input of the comment through the operation input portion 22 and has been transmitted in ensuing transmission operation to finish one round of transmission, the input of the comment on the selected information display portion a (33a) is considered to be finished, which leads to cancellation of the information display by the selected information display portion a (33a) . Afterward, when another round of transmission is finished, the input of a comment on the selected information display portion b (33b) is considered to be finished, which also leads to cancellation of the information display by the selected information display portion b (33b). If one more log is selected before canceling the display of the selected information display portion b (33b), it can be displayed as the selected information display portion to be canceled of displaying at the time of the completion of third round of transmission.

In Fig. 7(B), the input information display portion a (32a) is selected and a comment is input at the operation input portion 22 to display the comment on the input information display portion a (32a). Then, transmission operation is carried out to finish one round of transmission, at which point input of the comment on the selected information display portion a (33a) is considered to be finished, thus the display of the selected information display portion a (33a) is canceled and the display of the input information display portion a (32a) is canceled as well. Afterward, following the completion of one round of transmission, the input information display portion b (32b) is selected and a comment is input at the operation input portion 22 to display the comment on the input information display portion b (32b). Then, transmission operation is carried out to finish transmission of the comment, at which point the input of the comment on the selected information display portion b (33b) is considered to be finished, thus the display of the selected information display portion b (33b) is also canceled. At this time, cancellation of display of the input information display portion b (32b) may also be executed. It is preferable, however, that at least one input information display portion is left on the display screen 30 for allowing additional input even if the display cancellation is executed. In this case, it is preferable that a separate input information display portion is displayed on the display screen 30.

According to another embodiment of the present invention, the selected information output means of the above embodiments should preferably have a means that when the information is selected by the information selecting means outputs the selected information to the display portion 20 in order to replace the previously output information. In other words, the present embodiment allows a change of information already displayed as selected information in a process of selection change, in which the information already displayed as selected information is rewritten into newly selected information when the next selection of log information is carried out.

According to the present embodiment, therefore, the selected information displayed on the selected information display portion can be changed easily. Specifically, this information change can be carried out by selecting information for change at the operation input portion 22 in the same way as information on the log display portion is selected first. In this case, the information selected previously and displayed on the selected information display portion is deleted and the user does not need to cancel the display of already selected information upon selecting new information.

Fig. 10 is a diagram of an example of still another screen configuration of the electronic device of Fig. 1. Fig. 10 depicts an example of the screen configuration that allows variation in the ratio of each display area. According to another embodiment of the present invention, the ratio of display areas on the screen should preferably be variable in the above embodiments.

To that end, the division display means has a means that varies the ratio of each display area on the screen for input information, for log information, and for selected information. In other words, the number of display lines of the input information display means, the log display means, and the selected information display means is varied. The variable ratio of display areas can be achieved through a variety of methods, including, for example, a method of automatically changing the ratio of each display area according to the number of characters contained in each of the display portions 31, 32, and 33, a method of changing the ratio in which a user selects a portion where the user wants to display using a cursor at the operation input portion 22, and a method of displaying by giving priority to the size of the selected information display area.

The varying means is, for example, provided as a variable bar 34 shown in Fig.2, which is operated through the operation input portion 22 to change the display screen 30 on the right side in Fig. 10 to the display screen 30 on the left side in varying the ratio of display areas. This means that the number of display lines of the log display portion 31, input information display portion 32, and selected information display portion 33, which are displayed on the display screen 30, can be changed automatically or manually, as shown in Fig. 10. This is achieved, specifically, as the main controlling portion 16 carries out the control of changing a range for actually reading data out of each of the memories 17a, 17b, and 17c and delivering the data to the display portion 20 (display driver 19).

As a result, such a problem is solved that merely a part of selected information is displayed on the selected information display portion 33 when the selected information is a long sentence. Conversely, when the display of a part of the information of a long sentence is sufficient, only the part of the information of the long sentence is displayed in the visible range of the selected information display portion 33 and the selected information display portion 33 is scrolled to see the part of long sentence that is out of the visible range. This is the same as for the log display portion 31 and the input information display portion 32.

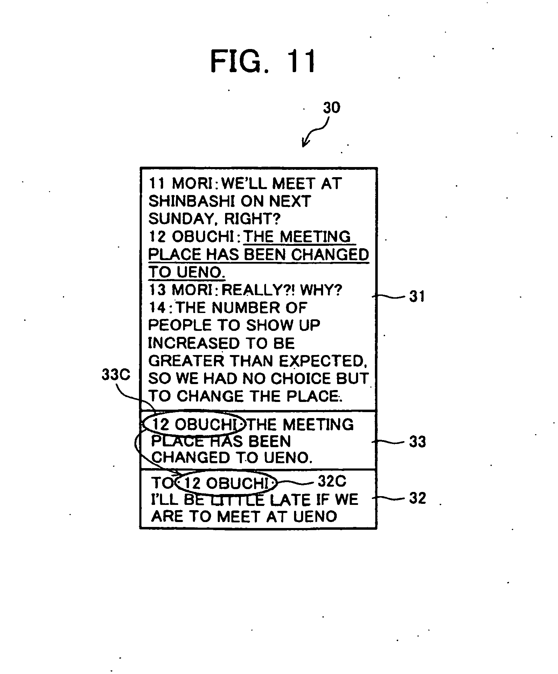

Fig. 11 is a diagram of an example of still another screen configuration of the electronic device of Fig. 1. Fig. 11 depicts an example of the screen configuration that the number and the name of the selected information to comment on are inserted in the character input screen. According to another embodiment of the present invention, a model sentence including subordinate information 32C of the selected information should preferably be inserted in the input information display portion 32 in the above embodiments.

To that end, the input information output means of the present embodiment has a means that outputs information of a model sentence in addition to input information from the input means, the model sentence containing subordinate information included in the selected information selected by the information selecting means, to the display portion 20 of Fig. 1 as a part of input information. The input information output means thus displays such a screen as the display screen 30 shown in Fig. 11. The input information output means outputs such information of a model sentence not only to the display portion 20, but also to the communication portion as transmission information. As a result, the model sentence of the selected information and the selected information itself are displayed also on the log display portion at the communicating party side (reception side), which allows the reception side to understand to which comment a message is meant.

According to the present embodiment, on the display screen 30, subordinate information 32C, which is equivalent to subordinate information 33C of the information in the log display portion 31 that is selected and displayed on the selected information display portion 33, is displayed on the input information display portion 32. Subordinate information, specifically, represents the number of selected information, the name of an information sender, a handle name, etc. The subordinate information offers an effect of facilitating the user in understanding to which information transmitted information replys and facilitating the communicating party in understanding to which information received information replys. Referring to Fig. 11, a comment "12 Obuchi: The meeting place has been change to Ueno." is selected and displayed on the selected information display portion 33, while "12 Obuchi", which is the subordinate information 32C of the comment, and "To:", which is a model sentence representing a replay, are displayed together on the input information display portion 32. In Fig. 11, the subordinate information 32C and the model sentence are displayed at the head of the sentence on the input information display portion 32 so as to be transmitted. In another instance, such a model sentence as ">Obuchi" may be added to the end of the sentence on the input information display portion 32 so as to be transmitted. This facilitates the user and communicating party in understanding to which message this comment corresponds.

In providing a substitute for the above embodiment described referring to Fig. 11, the input information output means may have a means that outputs selected information selected by the information selecting means, in addition to input information from the input means, to the display portion 20 as a part of input information. In this embodiment, the input information output means may output the selected information not only to the display portion 20, but also to the communication portion as transmission information. As a result, a model sentence of the selected information and the selected information itself are displayed also on the log display portion at the communicating party side (reception side), which allows the reception side to understand to which comment a message is meant.

According to the present embodiment, the original information in the log display portion that is selected onto the selected information display portion is displayed on the input information display portion. In this case, therefore, the selected information displayed on the selected information display portion is the same selected information displayed on the input information display portion. This means the insertion of the selected information itself into the input information display portion. As a result, a comment is transmitted together with the selected information to the communicating party, which allows the communicating party to easily understand to which original information the received information replys.

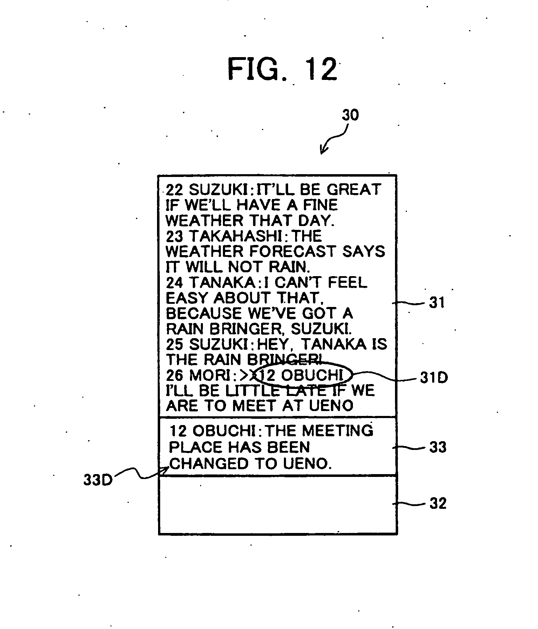

Fig. 12 is a diagram of an example of still another screen configuration of the electronic device of Fig. 1. Fig. 12 depicts an example of the screen configuration that given information is extracted from received log information and a piece of log information indicated by the given information is displayed on the selected information display screen. According to another embodiment of the present invention, given information is extracted from the received log information and a piece of log information indicated by the given information is searched out and automatically displayed on the selected information display portion in the above embodiments.

To that end, the information selecting means of the present embodiment has a means that extracts given information from information that is displayed at the display portion 20 of Fig. 1 as a result of output from the log information output means, for example, from the information that is displayed on the log display portion 31 on the display screen 30 of Fig. 12, and that selects a piece of log information related to the extracted given information.

On the display screen 30 of Fig. 12, for example, transmission side selected information 31D, which is included in log information as a selection result at the transmission side, is equivalent to given information. Specifically, when the reception side terminal device receives a message, the terminal device identifies a model sentence added to the message. According to the example of Fig. 12, the terminal device identifies a model sentence containing ">>" and an ensuing log number (and speaker's name), such as the transmission side selected information 31D (">>12 Obuchi") included in a message "26 Mori---", or identifies a model sentence mark ">>" that indicates information specification made at the transmission side. The given information to be identified here is not limited to a model sentence. The reception terminal device searches communication log in the internal log display memory 17b for the sentence "12 Obuchi: The meeting place has been changed to Ueno. ", which corresponds to "12 Obuchi" following ">>", to read out the sentence, and copies the sentence onto the selected information display memory 17c, then displays the sentence as automatically selected information 33D on the selected information display portion 33 as shown in Fig. 12.

Canceling of display of the automatically selected information 33D, which is a comment specified at the transmission side, is carried out in various cases including (1) a case where the user cancels the display through the operation input portion 22, (2) a case where the screen is scrolled to scroll the message (message "26 Mori" in the above example) out of the display screen, (3) a case where a new message is received, and (4) a case where new input information has been input at the reception side.

According to the above description, the automatically selected information 33D is displayed for a message displayed as log information on the reception side terminal device. The automatically selected information 33D, however, may be displayed in such a way that given information, such as ">>", is extracted from selected information, which is selected from log information and is displayed on the selected information display portion (may be already disappeared from the log display portion), and that a piece of log information indicated by the given information is searched out and automatically displayed on another selected information display portion as the automatically selected information 33D, such as "12 Obuchi: The meeting place has been changed to Ueno". For example, the selected information selected first is displayed on the selected information display portion a (33a) of Fig. 7 (A), and, if ">>" is contained in the first selected information, a piece of log information indicated by ">>" is automatically displayed on the selected information display portion b (33b) of Fig. 7 (A) . This means that the information selecting means further extracts given information from information that is already displayed on the selected information display portion 33 by user selection, the given information being extracted as information that is displayed at the display portion 20 as a result of output from the log information output means, and selects a piece of log information related to the extracted given information.

## Claims

1. A electronic device (1) having a display means for displaying information, an input means for inputting information, and a communication means (11, 12) for communicating with another electronic device, the electronic device comprising:
an input information output means for outputting input information from the input means to the display means and to the communication means;
a log information output means for outputting information transmitted and received by the communication means to the display means;
an information selecting means for selecting any desired information, based on a user's selection, out of information that is displayed by the display means as a result of output from the log information output means; and
a selected information output means for outputting information selected by the information selecting means to the display means. **characterised in that**
the display means has a division display means that simultaneously displays input information output from the input information output means, and
log information output from the log information output means on the same screen in a divided form, and
the division display means simultaneously displays selected information output from the selected information output means on the same screen in a divided form together with the input information and the log information only when the any desired information is selected in the information selecting means by a user's selection.

2. The electronic device as defined in claim 1, wherein
the information selecting means has a means that selects a plurality of pieces of information as the any desired information,
the selected information output means has a means that outputs the plurality of pieces of information selected by the information selecting means to the display means, and
the division display means has a means that simultaneously displays each of the plurality of pieces of output information on the same screen in a divided form.

3. The electronic device as defined in claim 1 or 2,
comprising a selecting means for selecting any one of display areas of the input information, the log information, and the selected information, wherein
the division display means has a means that displays the display area selected by the selecting means as an operable screen, and that displays other unselected display areas as inoperable screens in a discriminated manner.

4. The electronic device as defined in any one of claims 1 to 3.
wherein the log information output means has a means that outputs the information selected by the information selecting means to the display means, the information being selected out of log information displayed by the display means, to so display the selected information as to be discriminative from other unselected information.

5. The electronic device as defined in any one of claims 1 to 4,
comprising a selected information display canceling means for canceling the selected information output by the selected information output means to cancel display of the selected information at the display means.

6. The electronic device as defined in claim 5,
wherein the selected information display canceling means has a means that receives display canceling instruction operation of the selected information from a user, and a means that cancels the display of the selected information at the display means by detecting the execution of the display canceling instruction operation.

7. The electronic device as defined in claim 5,
wherein the selected information display canceling means has a means that cancels the display of the selected information at the display means by detecting the completion of information input through the input means as a reply to the selected information.

8. The electronic device as defined in claim 5,
wherein the selected information display canceling means has a means that cancels the display of selected information at the display means after transmitting the input information through the communication means as a reply to the selected information.

9. The electronic device as defined in any one of claims 1 to 8,
wherein the selected information output means has a means that when the information is selected by the information selecting means, outputs the selected information to the display means in order to replace the previously output information.

10. The electronic device as defined in any one of claims 1 to 9,
wherein the division display means has a means that varies a ratio of each display area on the screen for the input information output from the input information output means, for the log information output from the log information output means, and for the selected information output from the selected information output means.

11. The electronic device as defined in any one of claims 1 to 10,
wherein the input information output means has a means that outputs information of a model sentence, in addition to the input information from the input means, to the display means and/or to the communication means, the model sentence containing subordinate information included in the selected information selected by the information selecting means.

12. The electronic device as defined in any one of claims 1 to 10,
wherein the input information output means has a means that outputs the selected information selected by the information selecting means, in addition to the input information from the input means, to the display means and/or to the communication means.

13. The electronic device as defined in any one of claims 1 to 12,
wherein the information selecting means has a means that extracts given information out of information that is displayed at the display means as a result of output from the log information output means and selects log information related to the extracted given information.

14. The electronic device as defined in any one of claims 1 to 13. wherein
the division display means displays a display area for the log information through scrolling.

15. The electronic device as defined in claim 14, wherein
the division display means displays the selected information in order not to be superimposed on a display region of the log information.

16. The electronic device as defined in any one of claims 1 to 15, wherein
the electronic device (1) is a cellular phone or a personal digital assistant.

17. A program operable to be incorporated into the electronic device as defined in any one of claims 1 to 16.
the program operable to cause a processor (16) of the electronic device (1) to work as the input information output means, the log information output means, the selected information output means, and the division display means.

## Patentansprüche

1. Elektronische Einrichtung (1) mit einer Anzeigeeinrichtung zum Anzeigen von Information, einer Eingabeeinrichtung zum Eingeben von Information und einer Kommunikationseinrichtung (11, 12) zum Kommunizieren mit einer anderen elektronischen Einrichtung,
wobei die elektronische Einrichtung aufweist:
eine Eingabeinformationsausgabeeinrichtung zum Ausgeben von Eingabeinformation von der Eingabeeinrichtung an die Anzeigeeinrichtung und an die Kommunikationseinrichtung,
eine Aufzeichnungsinformationsausgabeeinrichtung zum Ausgeben von Information, die durch die Kommunikationseinrichtung übertragen und empfangen wurde, an die Anzeigeeinrichtung,
eine Informationsauswahleinrichtung zum Auswählen jeglicher gewünschter Information auf der Grundlage einer Benutzerauswahl, und zwar aus Information, die durch die Anzeigeeinrichtung als Ergebnis einer Ausgabe von der Aufzeichnungsinformationsausgabeeinrichtung angezeigt wird, und
eine Auswahlinformationsausgabeeinrichtung zum Ausgeben von durch die Informationsauswahleinrichtung ausgewählter Information an die Anzeigeeinrichtung,
**dadurch gekennzeichnet,**
**dass** die Anzeigeeinrichtung eine Unterteilungsanzeigeeinrichtung aufweist, welche in simultaner Art und Weise von der Eingabeinformationsausgabeeinrichtung ausgegebene Eingabeinformation und von der Aufzeichnungsinformationsausgabeeinrichtung ausgegebene Aufzeichnungsinformation auf derselben Anzeige in unterteilter Form anzeigt und
**dass** die Unterteilungsanzeigeeinrichtung in simultaner Art und Weise von der Auswahlinformationsausgabeeinrichtung ausgewählte Information auf derselben Anzeige in einer unterteilten Form zusammen mit der Eingabeinformation und der Aufzeichnungsinformation nur dann anzeigt, wenn die jegliche gewünschte Information in der Informationsauswahleinrichtung durch eine Benutzerauswahl ausgewählt ist.

2. Elektronische Einrichtung nach Anspruch 1,
wobei:
die Informationsauswahleinrichtung eine Einrichtung aufweist, welche eine Mehrzahl von Informationselementen als die gewünschte Information auswählt,
die Auswahlinformationsausgabeeinrichtung eine Einrichtung aufweist, welche die Mehrzahl von Informationselementen, welche durch die Informationsauswahleinrichtung ausgewählt wurden, an die Anzeigeeinrichtung ausgibt, und
die Unterteilungsanzeigeeinrichtung eine Einrichtung aufweist, welche in simultaner Art und Weise jedes der Mehrzahl von Elementen der Ausgabeinformation auf derselben Anzeige in einer unterteilten Form anzeigt.

3. Elektronische Einrichtung nach Anspruch 1 oder 2,
mit einer Auswahleinrichtung zum Auswählen irgendeines der Anzeigebereiche der Eingabeinformation, der Aufzeichnungsinformation und der ausgewählten Information,
wobei die Unterteilungsanzeigeeinrichtung eine Einrichtung aufweist, welche den durch die Auswahleinrichtung ausgewählten Anzeigebereich als eine bedien- oder betreibbare Anzeige anzeigt und welche andere nicht ausgewählte Anzeigebereiche als nicht bedien- oder betreibbare Anzeigen in einer unterschiedener Art und Weise anzeigt.

4. Elektronische Einrichtung nach einem der Ansprüche 1 bis 3,
wobei die Aufzeichnungsinformationsausgabeeinrichtung eine Einrichtung aufweist, welche die durch die Informationsauswahleinrichtung ausgewählte Information an die Anzeigeeinrichtung ausgibt, wobei die Information aus der Aufzeichnungsinformation ausgewählt ist und durch die Anzeigeeinrichtung angezeigt wird, um so die ausgewählte Information derart anzuzeigen, um von der nicht ausgewählten Information unterscheidbar zu sein.

5. Elektronische Einrichtung nach einem der Ansprüche 1 bis 4,
mit einer Auswahlinformationsanzeigelöscheinrichtung zum Löschen der ausgewählten Information, welche durch die Auswahlinformationsausgabeeinrichtung ausgegeben wurde, um die Anzeige der ausgewählten Information auf der Anzeigeeinrichtung zu löschen.

6. Elektronische Einrichtung nach Anspruch 5,
wobei die Auswahlinformationsanzeigelöscheinrichtung eine Einrichtung, welche von einem Benutzer eine Anzeigelöschinstruktionsbedienung in Bezug auf die ausgewählte Information empfängt, sowie eine Einrichtung aufweist, welche die ausgewählte Information auf der Anzeigeeinrichtung durch Detektieren der Ausführung der Anzeigelöschinstruktionsbedienung löscht.

7. Elektronische Einrichtung nach Anspruch 5,
wobei die Auswahlinformationsanzeigelöscheinrichtung eine Einrichtung aufweist, welche die Anzeige der ausgewählten Information aus der Anzeigeeinrichtung durch Detektieren des Abschlusses der Informationseingabe über die Eingabeeinrichtung als Antwort auf die ausgewählte Information löscht.

8. Elektronische Einrichtung nach Anspruch 5,
wobei die Auswahlinformationsanzeigelöscheinrichtung eine Einrichtung aufweist, welche die Anzeige ausgewählter Information auf der Anzeigeeinrichtung nach dem Übertragen der Eingabeinformation über die Kommunikationseinrichtung als Antwort auf die ausgewählte Information löscht.

9. Elektronische Einrichtung nach einem der Ansprüche 1 bis 8,
wobei die Auswahlinformationsausgabeeinrichtung eine Einrichtung aufweist, welche, wenn die Information durch die Informationsauswahleinrichtung ausgewählt ist oder wird, die ausgewählte Information an die Anzeigeeinrichtung ausgibt, um die zuvor ausgegebene Information zu ersetzen.

10. Elektronische Einrichtung nach einem der Ansprüche 1 bis 9,
wobei die Unterteilungsanzeigeeinrichtung eine Einrichtung aufweist, welche ein Verhältnis jedes Anzeigebereichs auf der Anzeige für die Eingabeinformation, die von der Eingabeinformationsausgabeeinrichtung ausgegeben wird, für die Aufzeichnungsinformation, die durch die Aufzeichnungsinformationsausgabeeinrichtung ausgegeben wird, und für die ausgewählte Information, die durch die Auswahlinformationsausgabeeinrichtung ausgegeben ist oder wird, variiert.

11. Elektronische Einrichtung nach einem der Ansprüche 1 bis 10,
wobei die Eingabeinformationsausgabeeinrichtung eine Einrichtung aufweist, welche Information eines Modellsatzes zusätzlich zur Eingabeinformation von der Eingabeeinrichtung an die Anzeigeeinrichtung und/oder an die Kommunikationseinrichtung ausgibt,
wobei der Modellsatz untergeordnete Information enthält, welche in der ausgewählten Information, die durch die Informationsauswahleinrichtung ausgewählt wird oder wurde, enthalten ist.

12. Elektronische Einrichtung nach einem der Ansprüche 1 bis 10,
wobei die Eingabeinformationsausgabeeinrichtung eine Einrichtung aufweist, welche die durch die Informationsauswahleinrichtung ausgewählte Information zusätzlich zu der Eingabeinformation von der Eingabeeinrichtung an die Anzeigeeinrichtung und/oder an die Kommunikationseinrichtung ausgibt.

13. Elektronische Einrichtung nach einem der Ansprüche 1 bis 12,
wobei die Informationsauswahleinrichtung eine Einrichtung aufweist, welche gegebene Information aus der Information, die auf der Anzeigeeinrichtung als Ergebnis der Ausgabe von der Aufzeichnungsinformationsausgabeeinrichtung angezeigt wird, extrahiert und welche Aufzeichnungsinformation in Bezug auf die extrahierte gegebene Information auswählt.

14. Elektronische Einrichtung nach einem der Ansprüche 1 bis 13,
wobei die Unterteilungsanzeigeeinrichtung einen Anzeigebereich für die Aufzeichnungsinformation durch Bildlauf oder Scrollen anzeigt.

15. Elektronische Einrichtung nach Anspruch 14,
wobei die Unterteilungsanzeigeeinrichtung die ausgewählte Information derart anzeigt, dass sie nicht mit dem Anzeigebereich für die Aufzeichnungsinformation überlagert wird.

16. Elektronische Einrichtung nach einem der Ansprüche 1 bis 15,
wobei die elektronische Einrichtung (1) ein Mobiltelefon oder ein Organizer ist.

17. Programm, welches in der elektronischen Einrichtung nach einem der Ansprüche 1 bis 16 enthaltend betreibbar ist,
wobei das Programm betreibbar ist, um einen Prozessor (16) der elektronischen Einrichtung (1) dazu zu bringen, als die Eingabeinformationsausgabeeinrichtung, die Aufzeichnungsinformationsausgabeeinrichtung, die Auswahlinformationsausgabeeinrichtung und die Unterteilungsanzeigeeinrichtung zu fungieren.

## Revendications

1. Dispositif électronique (1) comprenant un moyen d'affichage pour afficher des informations, un moyen d'entrée pour entrer des informations, et un moyen de communication (11, 12) pour communiquer avec un autre dispositif électronique, le dispositif électronique comprenant :
un moyen de sortie d'informations d'entrée pour délivrer des informations d'entrée provenant du moyen d'entrée au moyen d'affichage et au moyen de communication ;
un moyen de sortie d'informations de journal pour délivrer des informations transmises et reçues par le moyen de communication au moyen d'affichage ;
un moyen de sélection d'informations pour sélectionner toutes informations souhaitées, sur la base d'une sélection d'utilisateur, parmi des informations qui sont affichées par le moyen d'affichage en résultat de la sortie effectuée par le moyen de sortie d'informations de journal ; et
un moyen de sortie d'informations sélectionnées pour délivrer des informations sélectionnées par le moyen de sélection d'informations au moyen d'affichage, **caractérisé en ce que**
le moyen d'affichage comprend un moyen d'affichage de division qui affiche simultanément des informations d'entrée délivrées par le moyen de sortie d'informations d'entrée, et
des informations de journal délivrées par le moyen de sortie d'informations de journal sur le même écran sous une forme divisée, et
le moyen d'affichage de division affiche simultanément des informations sélectionnées délivrées par le moyen de sortie d'informations sélectionnées sur le même écran sous une forme divisée conjointement avec les informations d'entrée et les informations de journal uniquement lorsque lesdites informations souhaitées sont sélectionnées dans le moyen de sélection d'informations par une sélection d'utilisateur.

2. Dispositif électronique conformément à la revendication 1, dans lequel
le moyen de sélection d'informations comprend un moyen qui sélectionne une pluralité d'éléments d'informations en tant que lesdites informations souhaitées,
le moyen de sélection d'informations comprend un moyen qui délivre la pluralité d'éléments d'informations sélectionnés par le moyen de sélection d'informations au moyen d'affichage, et
le moyen d'affichage de division comprend un moyen qui affiche simultanément chacun de la pluralité d'éléments d'informations de sortie sur le même écran sous une forme divisée.

3. Dispositif électronique conformément à la revendication 1 ou 2,
comprenant un moyen de sélection pour sélectionner l'une quelconque des zones d'affichage des informations d'entrée, des informations de journal et des informations sélectionnées, dans lequel
le moyen d'affichage de division comprend un moyen qui affiche la zone d'affichage sélectionnée par le moyen de sélection en tant qu'écran exploitable, et qui affiche d'autres zones d'affichage désélectionnées en tant qu'écrans inexploitables d'une manière distincte.

4. Dispositif électronique conformément à l'une quelconque des revendications 1 à 3,
dans lequel le moyen de sortie d'informations de journal comprend un moyen qui délivre les informations sélectionnées par le moyen de sélection d'informations au moyen d'affichage, les informations étant sélectionnées parmi des informations de journal affichées par le moyen d'affichage, de manière à afficher les informations sélectionnées de façon à les différencier d'autres informations désélectionnées.

5. Dispositif électronique conformément à l'une quelconque des revendications 1 à 4,
comprenant un moyen d'annulation d'affichage d'informations sélectionnées pour annuler les informations sélectionnées délivrées par le moyen de sortie d'informations sélectionnées afin d'annuler un affichage des informations sélectionnées sur le moyen d'affichage.

6. Dispositif électronique conformément à la revendication 5,
dans lequel le moyen d'annulation d'affichage d'informations sélectionnées comprend un moyen qui reçoit une opération d'instruction d'annulation d'affichage des informations sélectionnées en provenance d'un utilisateur, et un moyen qui annule l'affichage des informations sélectionnées sur le moyen d'affichage par détection de l'exécution de l'opération d'instruction d'annulation d'affichage.

7. Dispositif électronique conformément à la revendication 5,
dans lequel le moyen d'annulation d'affichage d'informations sélectionnées comprend un moyen qui annule l'affichage des informations sélectionnées sur le moyen d'affichage par détection de l'achèvement d'une entrée d'informations par l'intermédiaire du moyen d'entrée en réponse aux informations sélectionnées.

8. Dispositif électronique conformément à la revendication 5,
dans lequel le moyen d'annulation d'affichage d'informations sélectionnées comprend un moyen qui annule l'affichage d'informations sélectionnées sur le moyen d'affichage après transmission des informations d'entrée par l'intermédiaire du moyen de communication en réponse aux informations sélectionnées.

9. Dispositif électronique conformément à l'une quelconque des revendications 1 à 8,
dans lequel le moyen de sortie d'informations sélectionnées comprend un moyen qui, lorsque les informations sont sélectionnées par le moyen de sélection d'informations, délivre les informations sélectionnées au moyen d'affichage afin de remplacer les informations précédemment délivrées.

10. Dispositif électronique conformément à l'une quelconque des revendications 1 à 9,
dans lequel le moyen d'affichage de division comprend un moyen qui fait varier un taux de chaque zone d'affichage sur l'écran pour les informations d'entrée délivrées par le moyen de sortie d'informations d'entrée, pour les informations de journal délivrées par le moyen de sortie d'informations de journal, et pour les informations sélectionnées délivrées par le moyen de sortie d'informations sélectionnées.

11. Dispositif électronique conformément à l'une quelconque des revendications 1 à 10,
dans lequel le moyen de sortie d'informations d'entrée comprend un moyen qui délivre des informations d'une phrase modèle, en plus des informations d'entrée provenant du moyen d'entrée, au moyen d'affichage et/ou au moyen de communication, la phrase modèle contenant des informations subordonnées comprises dans les informations sélectionnées sélectionnées par le moyen de sélection d'informations.

12. Dispositif électronique conformément à l'une quelconque des revendications 1 à 10,
dans lequel le moyen de sortie d'informations d'entrée comprend un moyen qui délivre les informations sélectionnées sélectionnées par le moyen de sélection d'informations, en plus des informations d'entrée provenant du moyen d'entrée, au moyen d'affichage et/ou au moyen de communication.

13. Dispositif électronique conformément à l'une quelconque des revendications 1 à 12,
dans lequel le moyen de sélection d'informations comprend un moyen qui extrait des informations données parmi des informations qui sont affichées sur le moyen d'affichage en résultat d'une sortie depuis le moyen de sortie d'informations de journal et qui sélectionne des informations de journal relatives aux informations données extraites.

14. Dispositif électronique conformément à l'une quelconque des revendications 1 à 13, dans lequel
le moyen d'affichage de division affiche une zone d'affichage pour les informations de journal par défilement.

15. Dispositif électronique conformément à la revendication 14, dans lequel
le moyen d'affichage de division affiche les informations sélectionnées afin de ne pas les superposer sur une région d'affichage des informations de journal.

16. Dispositif électronique conformément à l'une quelconque des revendications 1 à 15, dans lequel
le dispositif électronique (1) comprend un téléphone cellulaire ou un assistant numérique personnel.

17. Programme apte à être incorporé dans le dispositif électronique conformément à l'une quelconque des revendications 1 à 16,
le programme étant apte à amener un processeur (16) du dispositif électronique (1) à fonctionner en tant que le moyen de sortie d'informations d'entrée, le moyen de sortie d'informations de journal, le moyen de sortie d'informations sélectionnées et le moyen d'affichage de division.
